Europäisches Patentamt

European Patent Office

Office européen des brevets

(19)

(11) **EP 0 578 531 B1**

(12) **FASCICULE DE BREVET EUROPEEN**

(45) Date de publication et mention
de la délivrance du brevet:
**04.09.1996 Bulletin 1996/36**

(51) Int Cl.⁶: **H02J 9/06**

(21) Numéro de dépôt: **93401641.1**

(22) Date de dépôt: **25.06.1993**

(54) **Système d'alimentation à stockage réparti sans interruption**

Unterbrechnungsfreie Stromversorgung mit verteiltem Speichersystem

Distributed storage non-interruptable power supply system

(84) Etats contractants désignés:
**DE GB**

(30) Priorité: **29.06.1992 FR 9207961**

(43) Date de publication de la demande:
**12.01.1994 Bulletin 1994/02**

(73) Titulaire: **FRANCE TELECOM**
**F-75015 Paris (FR)**

(72) Inventeurs:
- **Girard, Jacques**
  **F-91370 Verrieres le Buisson (FR)**
- **Marquet, Didier**
  **F-92240 Malakoff (FR)**

(74) Mandataire: **Dubois-Chabert, Guy et al**
**Société de Protection des Inventions**
**25, rue de Ponthieu**
**75008 Paris (FR)**

(56) Documents cités:
**FR-A- 2 638 910**

- **EDN ELECTRICAL DESIGN NEWS. vol. 33, no. 9 , 28 Avril 1988 , NEWTON, MASSACHUSETTS US pages 225 - 231 LARS THORSELL 'Mini dc/dc supplies simplify redundancy in parallel systems'**
- **REVUE GENERALE DE L'ELECTRICITE. no. 2 , Février 1989 , PARIS FR pages 17 - 22 CHIGOLET 'Les applications des alimentations dans les télécommunications'**
- **REVUE GENERALE DE L'ELECTRICITE. no. 2 , Février 1989 , PARIS FR pages 29 - 34 DANNER ET AL. 'Alimentation statique sans interruption à sortie continue'**
- **L'ECHO DES RECHERCHES no. 113 , 1983 pages 45 - 60 GIRARD 'GEODE, un nouveau concept de l'alimentation en energie des systèmes de télécommunications'**
- **COMMUNICATION & TRANSMISSION no. 4 pages 59 - 76 GIRARD 'GEODE : une nouvelle génération d'alimentations en énergie pour équipements de télécommunications'**

## Description

## DOMAINE TECHNIQUE

La présente invention concerne un système d'alimentation à stockage réparti sans interruption.

Le domaine de l'invention est celui de l'alimentation en énergie des systèmes de télécommunications ou systèmes électroniques à fonctionnement sensible, c'est-à-dire qui ne tolèrent pas les coupures.

Le système de l'invention s'applique particulièrement :

- aux techniques de conversion de l'énergie électrique telles la transformation du courant continu en courant alternatif et la transformation inverse du courant alternatif en courant continu,
- aux techniques de stockage de l'énergie électrique, en mettant en application les récents développements technologiques du domaine,
- à l'association judicieuse de ces différentes techniques et technologies.

## ETAT DE LA TECHNIQUE ANTERIEURE

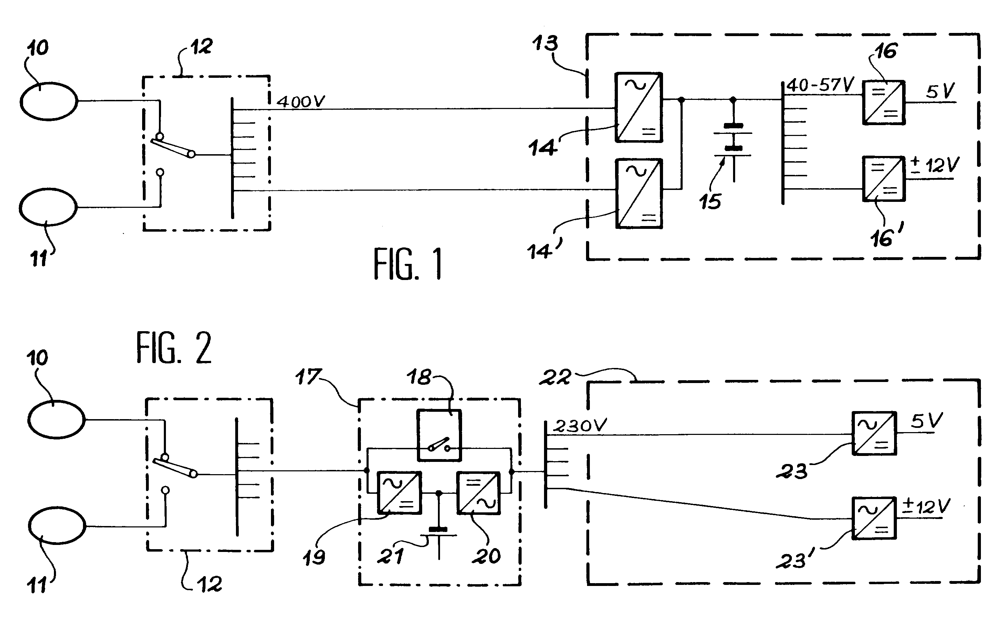

Comme décrit dans deux articles de J. Girard intitulés "Géode, un nouveau concept de l'alimentation en énergie des systèmes de télécommunications ("Echo des recherches", n° 113, 3ème trimestre 1983, pages 45 à 60) et "Geode : a new generation of power plant for telecommunications facilities" ("Commutation and transmission", numéro 4, 1986), les systèmes de télécommunications de l'art connu, comme celui représenté sur la figure 1, sont alimentés en courant continu sous une tension nominale de 48 volts. A partir du réseau public de distribution de l'énergie électrique 10 ou d'une source de secours 11 produisant une tension équivalente (tension alternative 230/400 V), un tableau basse tension 12 délivre une tension de 400 Volts triphasé, qui après distribution est reçue par le système 13 à alimenter comprenant des redresseurs 14 et 14', une batterie d'accumulateurs 15, et des convertisseurs 16 et 16'. Une conversion est effectuée de manière à produire une tension continue de 48 volts, assurant à la fois l'alimentation du système 13 et la recharge de la batterie 15. Cette dernière alimente le système, lors d'une coupure de la tension alternative, pendant le temps nécessaire à la mise en fonctionnement de la source de secours. La tension de 48 volts est distribuée dans tout le système à alimenter 13 et convertie en plusieurs tensions plus basses, compatibles avec les cartes électroniques (5 V ± 12 V, etc.).

Par contre, les systèmes informatiques de l'art connu, comme celui représenté sur la figure 2, sont alimentés le plus souvent par des alimentations dites "Sans Interruption" (ASI) 17 centralisées . Ces alimentations comprennent, par exemple, un convertisseur statique 18, des convertisseurs 19 et 20 et une batterie 400 volts 21. Dans l'équipement 22, des cartes d'alimentation 23 et 23' fournissent directement les tensions continues utiles à l'électronique (5 V, ±12 V,...), à partir du 230 volts alternatif.

Si ces systèmes de l'art connu procurent une grande sécurité d'alimentation en affranchissant les systèmes alimentés des aléas de la fourniture de la tension primaire alternative, ils présentent toutefois de nombreux inconvénients.

- des inconvénients d'ordre technique :

  . Dans les systèmes de télécommunication, la nécessité de procéder à une conversion tension alternative-tension continue, pour alimenter une réserve d'énergie électrique sous la tension 48 volts, réduit le rendement de la chaîne d'énergie de 10 à 20 %. De plus la tension 48 volts,qui est utilisée pour téléalimenter les terminaux téléphoniques,ne sera plus adaptée aux futurs terminaux numériques.

  . Les alimentations sans interruption qui alimentent les systèmes informatiques disposent en général de contacteurs statiques qui garantissent le basculement dans les meilleures conditions entre l'alimentation directe par le réseau public et l'alimentation filtrée via les redresseurs d'entrée suivi des onduleurs de sortie. Pour protéger le système contre les transitoires de basculement et offrir un niveau plus élevé de filtrage du réseau, ce dernier mode de fonctionnement est forcé en permanence. Ainsi, le rendement et la fiabilité sont ceux de ces trois niveaux de conversion mis en série. Ils sont alors nettement insuffisants pour l'alimentation de systèmes sensibles.

- des inconvénients d'ordre économique :

  . Les équipements mis en place pour la conversion tension alternative-tension continue sont dimensionnés pour satisfaire la puissance appelée par le système alimenté et sont par conséquent coûteux.

## EXPOSE DE L'INVENTION

L'invention a pour objet la réalisation d'un système d'alimentation à stockage reparti permettant l'alimentation de systèmes électroniques sensibles à travers un seul niveau de conversion en fonctionnement normal.

L'invention propose, à cet effet, un système d'alimentation, à stockage réparti sans interruption, de systèmes à fonctionnement sensible, caractérisé en ce qu'il comprend :

- au moins un circuit d'alimentation à réserve d'énergie courte durée associé à chaque système alimenté,

- un circuit d'alimentation à réserve d'énergie moyenne durée ayant un délai de réaction inférieur au délai d'autonomie du circuit d'alimentation à réserve d'énergie courte durée.

Avantageusement, le circuit d'alimentation à réserve d'énergie moyenne durée comprend un onduleur fonctionnant en parallèle (mode "off-line").

Avantageusement, un circuit d'alimentation à réserve d'énergie courte durée comprend successivement entre son entrée et sa sortie :

- un circuit de redressement et de filtrage,
- un circuit de conversion,
- un circuit de filtrage ;

une chaîne de secours comprenant :

- un circuit de stockage,
- un circuit de régulation,
- un circuit de charge du circuit de stockage ;

et un circuit de contrôle/commande de chacun de ces différents circuits.

Dans le système de l'invention ainsi caractérisé, la répartition du stockage et l'utilisation de matériels communs à plusieurs techniques conduisent à un principe d'alimentation à très haute fiabilité, à un encombrement réduit et à une maintenance aisée.

De plus, l'utilisation d'alimentation sans interruption banalisée complétée par la mise en oeuvre d'une exploitation simplifiée comparée à celle retenue pour les systèmes informatiques de l'art connu permet une réduction sensible des coûts d'investissement et d'exploitation de la chaîne d'énergie. En outre, le stockage courte durée associé aux convertisseurs intégrés dans les systèmes alimentés n'induit aucun surcoût significatif.

Par rapport aux systèmes de l'art connu, le système de l'invention permet un gain en coût de 20 à 30 % dans les systèmes considérés à partir du tableau de distribution.

## BREVE DESCRIPTION DES DESSINS

Les figures 1 et 2 illustrent deux systèmes de l'art antérieur,
la figure 3 illustre le système de l'invention,
la figure 4 illustre un circuit d'alimentation à réserve courte durée du système de l'invention.

## EXPOSE DETAILLE DE MODES DE REALISATION

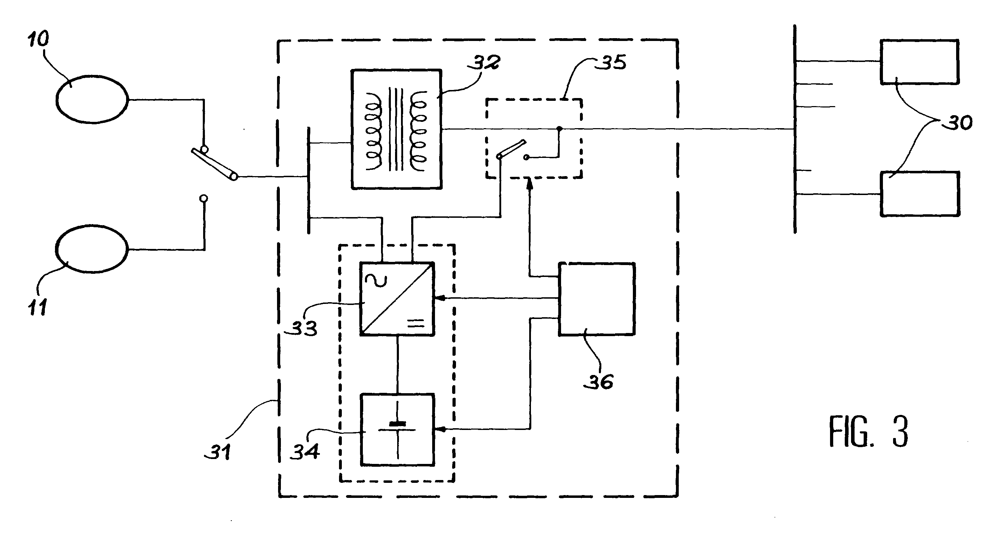

Le système d'alimentation, selon l'invention, à stockage réparti sans interruption de systèmes à fonctionnement sensible, qui peuvent être des systèmes de télécommunication ou des systèmes informatiques, est représenté à la figure 3. Il comporte au moins un circuit d'alimentation à réserve d'énergie courte durée 30 associé au système alimenté et disposé au plus près de celui-ci, et un circuit d'alimentation à réserve d'énergie moyenne durée 31, ayant un délai de réaction inférieur au délai d'autonomie du circuit d'alimentation à réserve d'énergie courte durée 30, ce circuit d'alimentation à réserve d'énergie moyenne durée 31 étant situé au niveau central.

La distribution de l'énergie électrique 10 et la source de secours 11, qui existaient dans les deux dispositifs de l'art antérieur, ont été représentées avec les mêmes références.

Le circuit de stockage de l'énergie moyenne durée 31 est associé à un dispositif de conversion banalisé 33 placé en veille qui est chargé de fournir la tension alternative en attendant le démarrage de la source d'énergie de secours longue durée 11.

Ainsi, si le réseau est coupé pendant quelques minutes, chaque circuit d'alimentation à réserve d'énergie courte durée 30 (inférieur à 1 minute) devient actif pour permettre le basculement du contacteur électromécanique 35 du circuit d'alimentation à réserve d'énergie moyenne durée 31 (inférieur à 1 heure), avant la mise en route de la source de secours 11. On obtient ainsi une qualité d'alimentation irréprochable (1 x 10$^{-6}$), des circuits d'alimentation à réserve d'énergie courte durée filtrant les microcoupures du réseau, par exemple inférieures à 300 ms.

Le circuit d'alimentation à réserve d'énergie moyenne durée, représenté sur la figure 3, comprend comprend :

- un transformateur de séparation 32 ayant pour objectif une grande sécurité des personnes, et la réalisation d'un premier filtrage des parasites de tous ordres émis par le réseau de distribution 10,
- un onduleur 33 fonctionnant en parallèle ou mode "off-line", associé à une batterie 34 qui permet d'obtenir l'autonomie en état de veille ,
- un contacteur électromécanique 35, par exemple de type ordinaire, permettant le basculement réseau-onduleur,
- une unité de commande 36 permettant de piloter ces différents éléments.

Avantageusement, ce circuit d'alimentation à réserve d'énergie moyenne durée 31 est réalisé par l'adaptation d'une Alimentation Sans Interruption (ASI) du commerce optimisée. En particulier, la fonction redressement-filtrage est limitée à la recharge de la batterie 34 après fonctionnement de l'alimentation sans interruption suite à l'interruption du réseau alternatif de distribution 10.

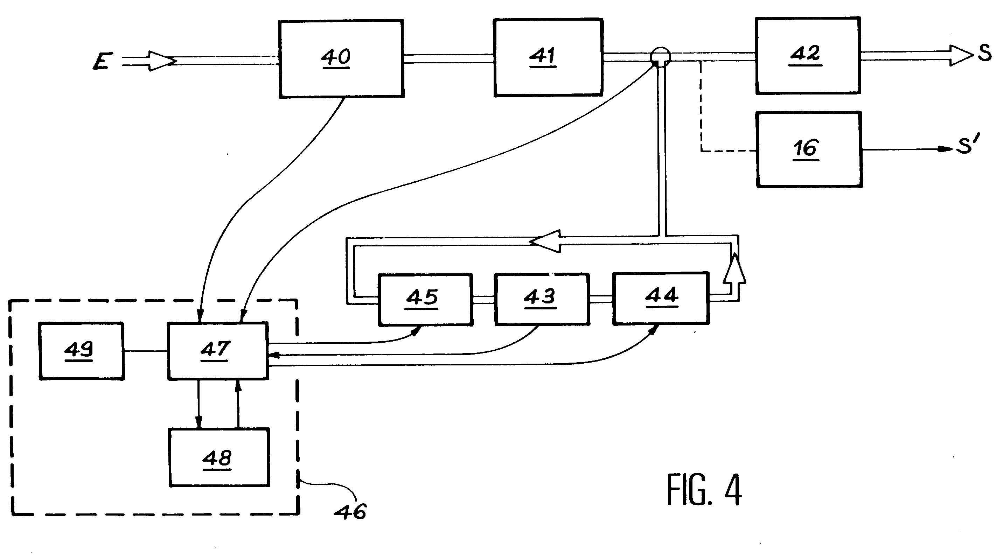

Comme représenté sur la figure 4, chaque circuit d'alimentation à réserve d'énergie courte durée 30 comprend successivement entre son entrée E (tension haute, alternative) et sa sortie S (tension basse) :

- un circuit de redressement et de filtrage 40,
- un circuit de conversion 41,
- un circuit de filtrage 42.

Ce circuit 30 comprend également une chaîne de secours comprenant :

- un circuit de stockage 43,
- un circuit de régulation 44,
- un circuit de charge 45 du circuit de stockage 43 ;

et un circuit de contrôle/commande 46 de chacun de ces différents circuits.

Dans la suite de la description, on va étudier successivement chacun de ces circuits.

- Le circuit de redressement et de filtrage 40 :

Ce circuit délivre une tension comprise entre 200 V et 400 V. Ce circuit permet de maintenir le fonctionnement du système alimenté quelques minutes après une coupure de la tension alternative E et de filtrer la tension redressée. Il peut être constitué, de manière connue de l'homme de l'art, d'un pont de diode chargeant un banc de condensateurs. Le courant d'appel, lors de la charge de ces condensateurs peut être limité par des résistances variables à coefficient de température positif (CTP). Une fois la charge achevée, le courant moyen diminue et la résistance des CTP devient négligeable dans le circuit. En amont du pont de diode, un filtre LC peut réduire la réinjection des perturbations conduites différentielles et de mode commun.

- Le circuit de conversion 41 :

Ce circuit peut être réalisé à l'aide d'un convertisseur continu du type 300 volts/5 volts continus de 200 Watts travaillant à des fréquences de découpage comprises entre 100 kHz et 1 MHz en fonction de la charge et offrant un rendement de 85 % à pleine charge. La plage de tension d'entrée s'étend de 200 volts à 400 volts.

- Le circuit de filtrage 42 :

Des filtres et des circuits de protection disposés ici en sortie de chaque circuit 30, mais aussi en entrée, limitent les niveaux de perturbations (sortantes ou entrantes) et isolent le système à alimenter en cas de défaillance.

- Le circuit de stockage 43 :

Ce circuit 43 peut être réalisé à l'aide d'une batterie organisée par exemple en deux branches de cinq éléments de 1,2 V chacun, afin d'obtenir 6 V en sortie. Cette organisation en deux branches permet de n'avoir que 15 A de courant dans chaque branche ainsi qu'une redondance du stockage. Ainsi, en cas de défaillance de l'une des branches, l'autre peut assurer l'alimentation, l'autonomie étant divisée par plus de deux, mais restant supérieure à quelques minutes.

- Le circuit de régulation 44 :

Dans l'exemple de réalisation considéré ci-dessus, la tension aux bornes de chaque branche de batterie peut varier de 8 V en charge à 5 V en fin de décharge. Or, il faut fournir en décharge une tension constante de 5,15 V en sortie, d'où la nécessité d'un régulateur pour chaque batterie.

Comme connu de l'homme de l'art, on peut utiliser, pour réaliser une telle régulation, un ou plusieurs transistors MOS dont la caractéristique de transductance est considérée afin de faire varier la tension drain-source. Dans ce cas, un amplificateur différentiel peut amplifier la différence entre la tension de référence, obtenue à partir d'une diode zener, et la tension effectivement mesurée à la sortie du circuit de conversion 41. La tension de référence peut être amenée à zéro par un microprocesseur ou par un détecteur de présence de tension inhibant ainsi l'action du régulateur. Lors des coupures d'alimentation, c'est ce dernier circuit qui régule la tension de sortie en décharge, alors que le microprocesseur en limite la durée.

- Le circuit de charge 45 du circuit de stockage 43 :

Ce circuit peut utiliser l'une des trois techniques de charge d'une batterie Nickel-Cadmium ; le mode floating, la charge rapide ou la charge lente :

. Le mode floating consiste à charger en permanence le circuit 43 sous un courant faible, quel que soit l'état de celui-ci (chargé ou déchargé). Un des gros inconvénients de cette méthode est que l'on accélère le vieillissement des éléments de ce circuit 43 par surcharge permanente.

. La charge rapide consiste à charger le circuit 43 sous fort courant (par exemple 4 Ampères) pendant une heure. Cette technique a l'avantage de recharger rapidement ce circuit 43, mais en accélère le vieillissement au même titre que la méthode précédente.

. La troisième solution, qui peut être avantageusement retenue, consiste à effectuer une charge lente, sous faible courant (par exemple 0,4 Ampère) pendant une durée par exemple de 16 heures. Le MTBF ("mean time before failure") du réseau EDF étant nettement supérieur à 16 heures, ceci laisse largement le temps de recharger le circuit 43 avant d'être en présence d'une nouvelle coupure secteur. Afin de satisfaire au critère de redondance du système dans l'exemple considéré plus haut, chaque branche de batteries dispose de son chargeur. Chaque chargeur consiste par exemple en une petite alimentation à découpage dont la contre-réaction est un asservissement en courant. On obtient donc un générateur de courant, celui-ci pouvant varier de 0 à 0,7 A. Ce générateur est un hacheur-élévateur de tension à découpage travaillant depuis le 5,15 V pour recharger les batteries. La tension aux bornes de chaque branche de batteries peut atteindre 8 V en fin de charge. Une télécommande peut être prévue afin de pouvoir piloter la recharge à partir du microprocesseur.

- le circuit de contrôle/commande 46 :

Ce circuit peut être réalisé par un microcontroleur, qui permet d'avoir sous un volume réduit une puissance importante de calcul et une grande souplesse pour la commande et la surveillance. De plus, il facilite un ajout ultérieur de nouvelles fonctions.

Les tâches effectuées par ce circuit 46 sont les suivantes :

- détection d'absence du secteur,
- entretien des batteries utilisées : par exemple une heure de charge à 0,4 (A) par jour,
- charge proportionnelle à la durée de décharge :

$$T(h) = (t/600)*(I/30)*16$$

- détection des défauts du circuit de stockage 43 ; par exemple celui des blocs de batteries :

$$tension < 6 \ V$$

- contrôle du courant et de la tension de sortie :

$$Vs < Vo - 10 \ \% \ ou \ Vs > Vo + 20 \ \%$$

- affichage de la tension et du courant de sortie.

La conversion analogique-numérique réalisée par le système de l'invention s'effectue par rapport à une tension référence externe ajustable. Les mesures que doit effectuer le circuit 46 sont assez disparates :

- tension secteur : 0 à 20 V (elle est prise après un transformateur),
- tension batteries : 0 à 8 V
- tension de sortie : 5,15 V
- courant de sortie (mesure d'une tension aux bornes d'un shunt) : 50 mV.

Un tel circuit 46 comporte avantageusement une unité centrale 47, une mémoire vive 48 et un afficheur 49.

La détection de l'absence secteur doit permettre la connexion du circuit de conversion 41 sur le circuit de stockage 43 en cas de coupure de la source alternative et réciproquement en cas de rétablissement. De manière connue de l'homme de l'art, cette fonction peut être réalisée en utilisant des détecteurs de seuils. En outre, le rôle de ce circuit 46 est de surveiller si aucun défaut n'apparaît sur le circuit de conversion 41 d'une batterie qui défaille. Pour contrôler tous ces paramètres, des mesures sont effectuées en sortie du circuit de conversion 41.

Le circuit de contrôle/commande 46 peut fonctionner selon un algorithme très simple comportant une boucle principale, qui peut comporter les étapes suivantes se répétant indéfiniment :

- tester la présence secteur,
- effectuer la conversion de la tension de sortie,
- voir si elle n'est pas hors normes,
- effectuer la conversion du courant de sortie,
- écrire en mémoire la tension et le courant,
- détecter un défaut éventuel du circuit de stockage 43.

Ce circuit 46 peut également comporter deux interruptions de débordement d'horloge et une interruption externe :

. La première interruption peut être chargée de gérer la mise en marche des charges journalières du circuit de charge 45, de calculer le temps de recharge du circuit de stockage 43 en fonction du temps de décharge, et de gérer les recharges.
. La deuxième interruption peut être chargée de rafraichir l'afficheur 49.
. La troisième interruption peut être une interruption externe, déclenchée par l'utilisateur si celui-ci désire visualiser un défaut. En effet, si un défaut a été relevé par le circuit 46, il suffit à l'utilisateur d'appuyer, par exemple, sur un bouton poussoir pour visualiser la nature de celui-ci sur l'afficheur 49.

Avantageusement, l'alimentation à réserve d'énergie courte durée 30 utilise un circuit de conversion 41 continu/continu à très haute densité d'énergie qui présente un bon rendement. Ce convertisseur de tension peut donc être implanté sur un circuit imprimé et ses pertes thermiques peuvent alors être évacuées par convection thermique grâce à un dispositif de refroidissement convenable. Ce circuit de conversion 41 assure également l'isolation galvanique entre le réseau alternatif tension haute (entrée E) et la tension basse en sortie (sortie S). Il doit offrir un fort taux de régulation de la tension de sortie S en fonction des fluctuations de la tension d'entrée E et des variations de charge.

A ce circuit de conversion 41 est associé un circuit de stockage 43 d'énergie courte durée, rechargeable plusieurs centaines de fois après utilisation. La décharge de ce dispositif de stockage 43 intervient lors du basculement du système de l'invention vers le circuit de stockage de l'énergie moyenne durée 31.

Avantageusement, ce dispositif de stockage courte durée 30 peut utiliser des batteries d'accumulateur étanches sous-dimensionnées. De telles batteries peuvent délivrer une puissance très importante, pourvu qu'on limite la durée de stockage pour les protéger contre toute irréversibilité. Une telle disposition est très économique. Ce stockage pourrait également être réalisé à l'aide de condensateurs de très forte capacité (plusieurs Farads), sous un volume réduit et pouvant délivrer un courant de quelques dizaines d'ampères.

La chaîne de secours courte durée, constituée des circuits de stockage 43, de régulation 44 et de charge 45 présente l'originalité de se connecter en un seul point : en sortie du circuit de conversion 41. Ce circuit 41 peut donc être d'un modèle commun et pourra évoluer indépendamment. La chaîne de secours prélève la puissance de charge du circuit de stockage 43 sur la sortie du circuit 41 à sa tension normale. Le circuit de charge 45 a pour rôle de rendre compatible cette tension de sortie avec la recharge du circuit de stockage 43. Ce peut être, par exemple, un élévateur de tension à découpage non isolé et à courant limité. Le couplage entre en opération dès que la tension de sortie du circuit de conversion 41 franchit un seuil bas. La mise en service d'un circuit de couplage peut être anticipée par l'observation d'un niveau bas sur la tension d'entrée. Un tel circuit a pour objet de maintenir une tension constante en sortie pendant la décharge et de limiter la durée de décharge. Dès le rétablissement de la tension de sortie du circuit de conversion 41, la décharge est interrompue. Avantageusement, ce dispositif de couplage peut être réalisé de façon simple à l'aide d'un transistor piloté par un régulateur linéaire commandé lui-même par des comparateurs de tension en sortie et en entrée, et un temporisateur de durée de décharge. Pour réduire la chute de tension au minimum (quelques dizaines de mV) à fort courant (quelques dizaines d'ampères), il est avantageux d'utiliser un transistor MOSFET faible tension, à très faible résistance interne en conduction.

Dans un exemple de réalisation particulier, le circuit d'alimentation à réserve courte durée 30 est une Alimentation à Réserve d'Energie 230 V/5 V 30 A offrant une autonomie de 5 à 10 mn sur batterie.

En fonctionnement normal, la tension haute alternative du réseau est convertie directement en une tension continue de sortie par le circuit de conversion 41 d'énergie principale qui peut assurer un isolement entre l'entrée E et la sortie S. Des tensions secondaires S' peuvent être obtenues par d'autres convertisseurs 16 utilisant la tension de sortie principale.

En fonctionnement secours, le circuit de stockage 43 maintient via le circuit de régulation 44, une tension constante en sortie pendant un temps volontairement limité, de manière à ne pas réduire la durée de vie du circuit de stockage 43.

Au rétablissement du fonctionnement normal, le circuit de charge 45 est mis en route jusqu'à la pleine charge du circuit de stockage 43.

Des considérations de fiabilité concernant ce circuit de stockage 43 peuvent conduire à doubler la chaîne de secours.

Dans cet exemple de réalisation, les fonctions vitales sont bâties en électronique non programmée, tandis que celles de haut niveau sont traitées par un microcontrôleur qui, par ailleurs renseigne via l'afficheur 49 sur l'état du système de l'invention.

Plusieurs améliorations du circuit d'alimentation de réserve courte durée sont possibles. A savoir étendre la surveillance ainsi que lui ajouter un rôle de sauvegarde des données mesurées pour que celles-ci puissent être lues à distance via un réseau de télégestion.

Chaque circuit de stockage 43 peut comporter des branches de batteries conçues de façon modulaire : chargeurs, régulateurs et batteries. Le circuit de conversion 41 lui-même peut être un module d'alimentation déjà prévu pour fonctionner en parallèle avec d'autres modules. On peut donc facilement augmenter la puissance si nécessaire.

A titre d'exemple, pour un système de télécommunication de moyenne capacité raccordé à 30 000 abonnés, le système de l'invention peut comporter une centaine de circuits d'alimentation à réserve d'énergie courte durée 30 de 200 Watts chacun.

## Revendications

1. Système d'alimentation, à stockage réparti sans interruption, de systèmes à fonctionnement sensible alimentés à partir du réseau public (10) de distribution de l'énergie électrique ou d'une source de secours (11) produisant une tension équivalente, caractérisé en ce qu'il comprend :

   - au moins un circuit d'alimentation à réserve d'énergie courte durée (30) associé à chaque système alimenté,
   - un circuit d'alimentation à réserve d'énergie moyenne durée (31) ayant un délai de réaction inférieur au délai d'autonomie du circuit d'alimentation à réserve d'énergie courte durée.

2. Système selon la revendication 1, caractérisé en ce que le circuit d'alimentation à réserve d'énergie moyenne durée (31) comprend un onduleur (33).

3. Système selon l'une des revendications 1 ou 2, caractérisé en ce qu'un circuit d'alimentation à réserve d'énergie courte durée (30) comprend successivement entre son entrée (E) et sa sortie (S) :

   . un circuit de redressement et de filtrage (40),
   . un circuit de conversion (41),
   . un circuit de filtrage (42) ;

   une chaîne de secours comprenant :

   . un circuit de stockage (43),
   . un circuit de régulation (44),
   . un circuit de charge (45) du circuit de stockage (42) ;

   et un circuit de contrôle/commande (46) de chacun de ces différents circuits.

**Patentansprüche**

1. Unterbrechungsfreies Stromversorgungssystem mit verteilter Speicherung für Systeme, die im wesentlichen über das öffentliche Stromversorgungsnetz (10) oder über eine Hilfsstromquelle (11) mit gleicher Spannung gespeist werden, dadurch gekennzeichnet, daß es folgendes umfaßt:

   - mindestens einen Speisestromkreis mit Kurzdauer-Energiereserve (30), der mit jedem versorgten System verbunden ist;

   - einen Speisestromkreis mit Mitteldauer-Energiereserve (31), dessen Ansprechzeit unter der Abschaltzeit des Speisestromkreises mit Kurzdauer-Energiereserve liegt.

2. System gemäß Anspruch 1, dadurch gekennzeichnet, daß der Speisestromkreis mit Mitteldauer-Energiereserve (31) einen Wechselrichter (33) umfaßt

3. System gemäß eines der Ansprüche 1 oder 2, dadurch gekennzeichnet, daß der Speisestromkreis mit Kurzdauer-Energiereserve (30) zwischen seinem Eingang (E) und seinem Ausgang (S) hintereinander folgendes umfaßt:

   . einen Gleichrichtungs- und Filterkreis (40),

   . einen Umwandlungskreis (41),

   . einen Filterkreis (42);

   eine Hilfskette, die folgendes umfaßt:

   . einen Speicherkreis (43),

   . einen Regelkreis (44),

   . einen Aufladekreis (45) für den Speicherkreis (43);

   sowie einen Steuer-/Regelkreis (46) für jeden dieser verschiedenen Kreise.

**Claims**

1. An uninterrupted, distributed storage supply system for sensitively operating systems supplied from the public electric energy distribution mains (10) or an emergency power supply (11) producing an equivalent voltage, characterized in that it comprises at least one short term energy reserve supply circuit (30) associated with each supplied system and a medium term energy reserve supply circuit 31 having a reaction delay shorter than the autonomy delay of the short term energy reserve supply circuit.

2. System according to claim 1, characterized in that the medium term energy reserve supply circuit (31) comprises a wiggler (33).

3. System according to either of the claims 1 and 2, characterized in that a short term energy reserve supply circuit (30) successively comprises between its input (E) and its output (S) a rectifying and filtering circuit (40), a conversion circuit (41), a filtering circuit (42), an emergency chain incorporating a storage circuit (43), a regulating circuit (44), a charging circuit (45) for the storage circuit (42) and a conttrol/checking circuit (46) for each of the aforementioned circuits.

FIG. 1

FIG. 2

FIG. 3

EP 0 578 531 B1

FIG. 4